Europäisches Patentamt

European Patent Office

Office européen des brevets

(11) Numéro de publication : **0 003 271**
**B1**

(12) **FASCICULE DE BREVET EUROPÉEN**

(45) Date de publication du fascicule du brevet :
08.07.81

(21) Numéro de dépôt : 78400251.1

(22) Date de dépôt : 20.12.78

(51) Int. Cl.³ : **G 01 K 17/00, G 01 K 7/04,**
**H 01 L 35/32**

(54) **Fluxmètre thermique.**

(30) Priorité : 02.01.78 FR 7800009

(43) Date de publication de la demande :
08.08.79 (Bulletin 79/16)

(45) Mention de la délivrance du brevet :
08.07.81 Bulletin 81/27

(84) Etats contractants désignés :
**BE CH DE FR GB IT LU NL SE**

(56) Documents cités :
**FR - A - 2 238 252**
**US - A - 3 554 815**
**US - A - 4 050 302**

(73) Titulaire : **SAINT-GOBAIN INDUSTRIES**
**62, Bd Victor Hugo**
**F-92209 Neuilly sur Seine (FR)**

(72) Inventeur : **Degenne, Michel**
**35, rue Paul Louis**
**F-60600 Clermont (FR)**

(74) Mandataire : **Eudes, Marcel et al**
**SAINT-GOBAIN RECHERCHE 39 Quai Lucien Lefranc**
**F-93304 Aubervilliers CEDEX (FR)**

Imprimerie Jouve, 17, rue du Louvre, 75001 Paris, France

Fluxmètre thermique

La présente invention est relative, d'une façon générale, à la métrologie thermique, et en particulier, à la détermination de la quantité de chaleur qui passe par unité de temps et de surface à travers une paroi.

Elle concerne un dispositif pour la mesure d'un flux thermique, appelé fluxmètre thermique, utilisé notamment pour les mesures de la conductivité ou de la résistance thermique, par exemple de matériaux d'isolation ou d'éléments de construction.

On sait que la mesure des propriétés thermiques de certains matériaux isolants fibreux légers et épais nécessite l'utilisation de dispositifs du genre indiqué ci-dessus ayant une surface de mesure.

On a déjà construit des dispositifs thermoélectriques de grande longueur, capables de produire des différences de température entre deux de leurs zones lorsqu'on les alimente en courant électrique continu et inversement de fournir un courant électrique lorsque ces deux zones sont portées à des températures différentes. Ainsi, le brevet U.S 3 554 815 décrit un ruban thermoélectrique formé d'un substrat isolant, revêtu sur une face de plaquettes en une pellicule de matière thermoélectrique, sur l'autre face de plaquettes en une pellicule d'une autre matière thermoélectrique, perforé à proximité de ses bords, suivant un pas déterminé, de trous remplis d'une matière conductrice de l'électricité établissant la jonction électrique entre une plaquette d'une face avec une plaquette de l'autre face. Des bandes de matière conductrice de l'électricité peuvent également être déposées sur les plaquettes de chaque face, parallèlement aux bords du ruban, les trous d'une face à l'autre du ruban se situant à l'intérieur de ces bandes. Une association en série de thermocouples dont les jonctions chaudes et froides sont respectivement sur chacun des bords du ruban, sur les bandes conductrices, est ainsi constituée, et on peut générer entre ces deux bandes un gradient de température lorsqu'on alimente les extrémités du ruban en courant électrique continu, ou inversement recueillir un courant électrique aux extrémités du ruban lorsque lesdites deux bandes sont portées à des températures différentes.

Mais lorsqu'on veut déterminer non plus un gradient de température entre deux lignes, mais un flux thermique au travers d'une surface de grande dimension, de forme géométrique quelconque, ce dispositif n'est pas adapté.

La présente invention propose un fluxmètre thermique pouvant présenter une grande surface, de n'importe quelle forme, et aux bornes duquel on pourra recueillir une tension électrique qui sera fonction du flux thermique traversant sa surface.

Un tel fluxmètre comporte un substrat isolant de l'électricité, revêtu sur ses deux faces d'une couche d'un premier métal, dans laquelle on a prévu des pistes isolantes pour obtenir une configuration de conduction déterminée. A cette configuration appartiennent des conducteurs tubulaires qui traversent un trou sur deux d'un réseau de trous percés transversalement dans le substrat, les autres trous du substrat étant revêtus d'un second métal pour réaliser des jonctions thermoélectriques. On obtient un montage en série d'un certain nombre de thermocouples aux bornes duquel il est possible de prélever une tension électrique qui est la somme des forces électromotrices engendrées par tous les thermocouples et qui est une fonction de la différence de température régnant de part et d'autre du substrat.

Les jonctions thermoélectriques ainsi que les conducteurs peuvent être réalisés par des techniques de métallisation (galvanoplastie, dépôts par voie chimique ou autre) et de photogravure, usuelles par exemple dans la fabrication des circuits imprimés.

Il en résulte les avantages suivants :

— la possibilité de réaliser des fluxmètres de grande surface et de diverses formes capables de rendre compte d'un flux thermique traversant ladite surface,

— une rapidité de fabrication en série avec une bonne reproductibilité géométrique et électrique, des méthodes globales de fabrication éliminant toute intervention manuelle ponctuelle pouvant être utilisées.

— une uniformité dans la réalisation des jonctions,

— une grande sensibilité par l'augmentation de la densité des jonctions, c'est-à-dire de l'augmentation du nombre de jonctions par unité de surface, sans que le temps de fabrication s'en trouve augmenté, du fait de la possibilité d'utiliser une méthode globale de fabrication,

— une intégration de la température de surface à l'aide de plaquettes métalliques formant les conducteurs superficiels et la réalisation de deux plans constituant la face chaude et la face froide du substrat, ces deux plans présentant une meilleure isothermicité,

— une absence de pont thermique entre les deux faces du substrat, du fait de la conduction par films métalliques très minces.

D'autres caractéristiques et avantages de l'invention apparaîtront au cours de la description qui va suivre, donnée uniquement à titre d'exemple et faite en se référant aux dessins annexés sur lesquels :

La figure 1 est une vue en perspective de la partie sensible ou capteur d'un fluxmètre selon l'invention ;

La figure 2 est une vue prise suivant la ligne 2-2 de la fig. 1 ;

La figure 3 montre une vue en plan schématique, avec arrachement partiel, d'un fluxmètre réalisé selon l'invention et comportant le capteur représenté sur la fig. 1 ;

La figure 4 est une vue en coupe transversale prise suivant la ligne 4-4 de la fig. 3 ;

La figure 5 est une vue en plan, analogue à celle de la fig. 3, et représentant un autre mode de réalisation du fluxmètre suivant l'invention ;

La figure 6 est une vue en coupe transversale prise suivant la ligne 6-6 de la fig. 5 ;

La figure 7 est une vue schématique en plan montrant l'un des cheminements possibles des thermocouples dans le fluxmètre ;

La figure 8 montre un autre cheminement possible des thermocouples dans le fluxmètre.

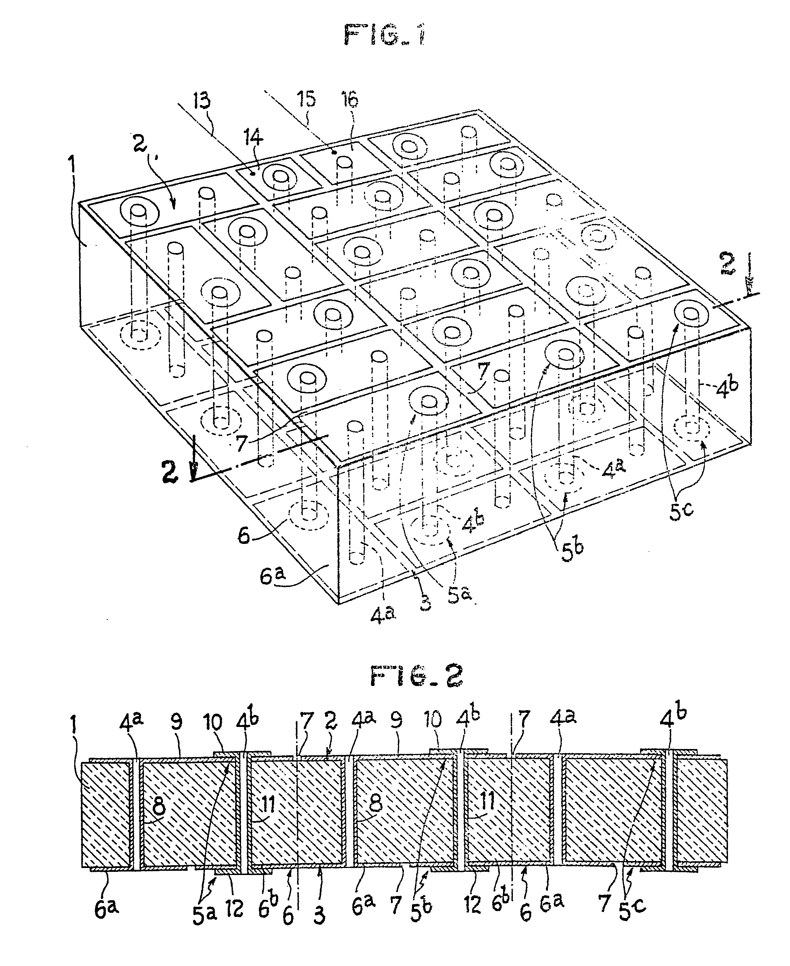

Suivant le mode de réalisation représenté aux fig. 1 et 2, la partie sensible ou capteur du fluxmètre suivant l'invention comprend un substrat 1 réalisé en un matériau isolant de l'électricité tel qu'un verre époxy. Ce substrat peut être une plaque rigide ou souple et comporte un réseau de trous traversants orientés perpendiculairement aux faces 2 et 3 du substrat, ce réseau étant composé d'une première série de trous 4a et d'une seconde série de trous 4b alternant avec les trous de la première série.

Ce réseau de trous est associé à un certain nombre de thermocouples 5a, 5b, 5c... montés électriquement en série et constitués de la façon suivante :

Chaque thermocouple comporte tout d'abord une portion 6a d'une plaquette 6 formant partie d'une couche de revêtement métallique appliquée contre la face inférieure du substrat et dans laquelle sont tracées des pistes croisées 7 isolant toutes les plaquettes les unes des autres. La portion 6a est connectée à une portion conductrice tubulaire 8 constituée par un revêtement de la paroi du trou 4a du thermocouple considéré. Ce revêtement établit donc la connection électrique entre les faces 2 et 3 du substrat 1. Il est connecté à une plaquette 9 formant partie d'une couche de revêtement métallique déposée sur la face supérieure du substrat 1. Les plaquettes 9 sont isolées les unes des autres par des pistes croisées isolantes 7 analogues aux pistes 7 de la face inférieure, mais non alignées sur celles-ci. Chaque thermocouple comporte ensuite dans une zone annulaire entourant le trou 4b, une rondelle 10 réalisée en un métal formant avec le métal dans lequel sont réalisées les plaquettes 6 et 9 une jonction thermoélectrique. Cette rondelle 10 fait partie d'un réseau de rondelles semblables recouvrant la couche de plaquettes 9 et associées respectivement à la seconde série de trous 4b du substrat 1. Elle est raccordée à une portion conductrice 11 constituée par un revêtement métallique de la paroi du trou 4b, ce revêtement s'étendant jusqu'à la face inférieure 3 du substrat 1 et étant relié à une rondelle 12 recouvrant, dans une zone entourant le trou 4b, la portion 6b d'une plaquette 6 qui est adjacente à la plaquette 6 déjà décrite ci-dessus.

Il est à noter que dans la coupe suivant la fig. 2, les épaisseurs des revêtements métalliques sont exagérées considérablement pour la clarté du dessin.

On voit que chaque thermocouple 5a, 5b, 5c... est relié par l'intermédiaire des plaquettes 6, des plaquettes 9 et des trous 8 d'une part au thermocouple qui le précède dans le montage en série des thermocouples et également à celui qui le suit dans ce même montage.

On voit également que chaque thermocouple comporte une jonction chaude constituée par exemple par la rondelle 10 et la partie de la plaquette 9, située sous ladite rondelle 10 et une jonction froide constituée par la rondelle 12 et la portion de la plaquette 6 située sous ladite rondelle 12.

Dans un mode de réalisation préférée de l'invention, les plaquettes 6 et 9 sont réalisées en cuivre tandis que les rondelles 10 et 12 ainsi que la portion conductrice 11 sont réalisées en du nickel étant entendu que tout couple thermoélectrique formé par des métaux susceptibles d'être déposés par des techniques de métallisation et ayant des propriétés thermoélectriques appropriées peut être utilisé. Il est entendu que le mot métal couvre également les alliages.

Dans le mode de réalisation représenté, les plaquettes 6 et 9 ont une forme rectangulaire, leur longueur étant le double de leur largeur. En outre, on voit que chaque plaquette 6 quelconque appartenant à l'une des faces du substrat coïncide avec la moitié de deux plaquettes appartenant à la face opposée du substrat, cette disposition s'étant avérée la plus avantageuse pour obtenir une densité maximale des thermocouples par unité de surface. Il est à noter, d'ailleurs, que les dimensions des plaquettes ont été exagérées pour la clarté du dessin, leurs dimensions pouvant être nettement plus faibles ce qui augmente d'autant la densité des thermocouples.

Le capteur montré sur la fig. 1 présente une borne d'entrée 13 qui est raccordée à une plaquette d'entrée 14. Cette dernière remplace pour le thermocouple considéré, la moitié d'une plaquette quelconque 9 ou 6 prévue pour les autres thermocouples. De même, le capteur comporte une borne de sortie 15 raccordée à une plaquette de sortie 16 qui est l'autre moitié de la plaquette 9 ou 6 déjà partiellement utilisée pour l'entrée. La tension thermoélectrique engendrée par le capteur du fluxmètre représenté aux fig. 1 et 2 peut donc être prélevée aux bornes 13 et 15.

Pour fabriquer ce capteur, on peut procéder de la façon suivante : on prépare tout d'abord un substrat 1 rigide ou souple ayant deux faces parallèles. Le matériau choisi pour ce substrat peut être un matériau quelconque usuel dans la technique des circuits imprimés. Par exemple, si on désire obtenir un fluxmètre ayant une tenue en température allant jusqu'à 120 °C on utilise de préférence du verre époxy. Si on désire obtenir une température supérieure à 200 °C, on peut utiliser un tissu de verre imprégné d'une résine polyimide.

Ce substrat est revêtu sur ses deux faces d'une couche d'un premier métal susceptible de former un élément d'un couple thermoélectrique, tel que le cuivre par exemple. Il peut être avantageux d'utiliser à ce stade, un substrat déjà revêtu de cuivre sur les deux faces ; de tels substrats de diverses natures, ainsi revêtus existent sur le marché pour les besoins de l'industrie de l'électronique.

On perce ensuite une première série de trous 4a dans le substrat, avec un pas qui est le double du pas du réseau de trous du produit fini. L'ensemble est alors soumis à une opération de préparation le rendant apte à recevoir un dépôt de cuivre après quoi on procède au cuivrage au moyen duquel le substrat est revêtu sur ses deux faces d'une nouvelle couche de métal, ce dernier revêtant alors également les parois des trous 4a qui sont pratiqués dans le substrat.

On procède alors au perçage d'une deuxième série de trous 4b pour former le réseau tel que représenté aux fig. 1 et 2. Une résine photosensible est appliquée sur les deux faces de l'ensemble obtenu et on procède au masquage et à l'exposition de ces deux faces, le masque comportant des ouvertures laissant libre de part et d'autre des trous 4b, des zones annulaires destinées au formage ultérieur des rondelles 10 et 12.

On procède à une préparation chimique de l'ensemble et à un nickelage ce qui donne lieu à la formation desdites rondelles ainsi que des revêtements des trous 4b, les trous 4a ayant été obturés par le masque. L'ensemble est ensuite nettoyé pour éliminer la couche de masquage après quoi on procède à une nouvelle application d'une résine photosensible et à la mise en place de part et d'autre du substrat, d'un masque comportant la configuration des pistes d'isolation 7 des plaquettes. Ces pistes sont alors obtenues par décapage. Après élimination du dernier masque on obtient le capteur tel que représenté aux fig. 1 et 2.

Bien entendu, la forme décrite des plaquettes 6 et 9 n'est pas limitative. Par exemple, il est possible de relier les trous correspondants du substrat 1 par des plaquettes en forme de haltères ou autre forme appropriée ce qui permet d'obtenir les mêmes résultats qu'avec l'agencement représenté aux fig. 1 et 2.

Une autre variante du capteur consiste à revêtir les trous 4a et 4b respectivement avec des métaux différents (de l'or et du platine, par exemple) et de choisir pour les couches de revêtement des faces 2 et 3 du substrat 1 un troisième métal (tel que le cuivre). Les revêtements des trous sont alors reliés à des rondelles du même métal recouvrant les couches superficielles autour des trous respectifs et déposées en même temps que les revêtements de trous.

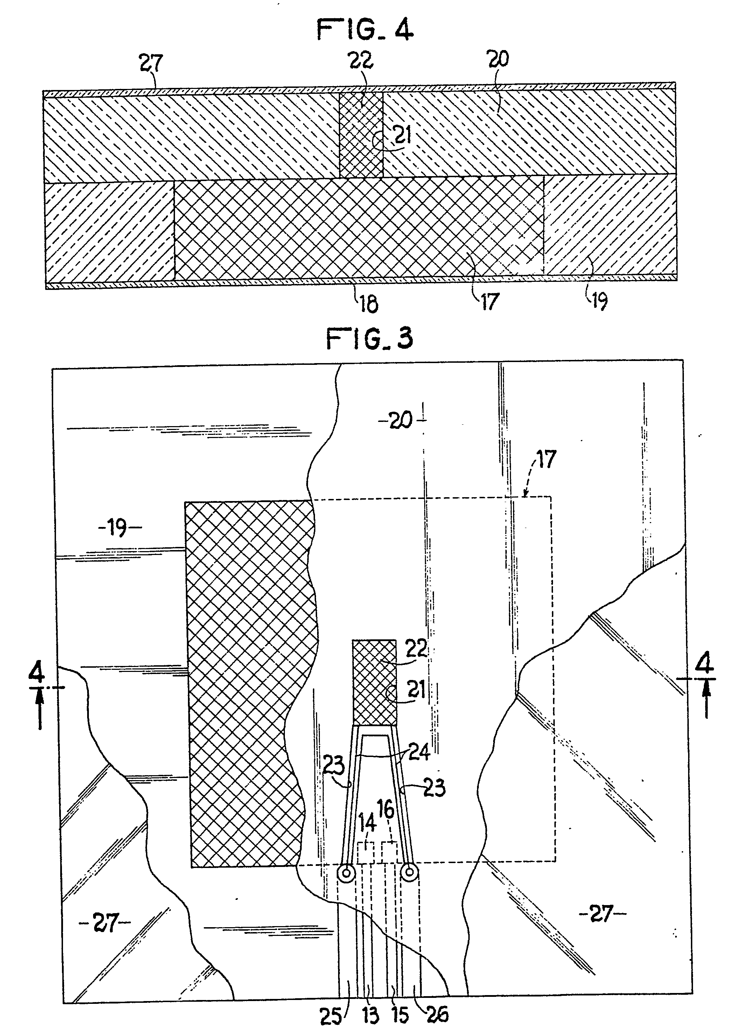

Les fig. 3 et 4 représentent un mode de réalisation du fluxmètre selon l'invention. Celui-ci comprend un capteur 17 tel que celui représenté sur la fig. 1 étant entendu que le nombre de thermocouples peut être aussi important que l'on veut, par exemple de 1 250 pour un capteur ayant des dimensions de 250 × 250 mm.

Le fluxmètre comporte une couche de protection inférieure 18, par exemple en verre époxy et pouvant avoir une épaisseur de 0,15 mm environ. Le capteur 17 placé au centre de la surface de cette couche de protection 18 est entouré par un cadre 19 de protection latérale réalisé de préférence dans le même matériau que le substrat du capteur, par exemple également en verre époxy et ayant une épaisseur à peu près égale à celle du capteur 17, soit 2,4 mm par exemple.

Le cadre 19 ainsi que le capteur 17 sont recouverts d'une plaque 20 toujours en même matériau, verre époxy par exemple, et ayant une épaisseur de 2 mm environ. Au centre de cette plaque 20 est ménagé un logement 21 dans lequel est disposée une sonde de température 22, par exemple une sonde à résistance de platine, permettant de mesurer la température de référence du fluxmètre. Des rainures 23 font communiquer le logement 21 avec le cadre 19 et permettent de loger les fils de connexion 24 de la sonde 22. La sonde 22 ainsi que ses fils de connexion 24 sont enrobés dans une résine de protection. Le côté du cadre 19 adjacent aux bornes 14 et 16 du capteur 17 est pourvu de quatre conducteurs de liaison dont deux 25 et 26 sont raccordés aux fils 24 de la sonde 22 et dont les deux autres forment les bornes 13 et 15 du capteur 17. Les conducteurs 13, 15, 25, 26 peuvent être formés par des rubans de cuivre collés ou fixés d'une autre manière sur la face correspondante du côté du cadre 19. Ces rubans permettent le branchement d'un connecteur extérieur. Avantageusement, pour réduire le nombre de connexions, on utilisera un support de capteur ayant à l'aplomb des plaquettes d'entrée 14 et de sortie 16, un prolongement allant jusqu'au bord du cadre de protection 19, lequel cadre sera échancré pour permettre l'insertion du prolongement.

Sur ce prolongement seront réalisés les conducteurs 13, 15, 25 et 26, en même temps que sont formées les plaquettes. Ainsi, les plaquettes 14 et 16 sont en continuité électrique avec les conducteurs 13 et 15. L'ensemble que l'on vient de décrire est recouvert d'une couche 27 en verre époxy par exemple, d'une épaisseur de 0,15 mm environ, protégeant le fluxmètre qui est assemblé à l'aide d'un adhésif en résine époxy. La polymérisation de cet adhésif peut s'effectuer à température ambiante, en même temps que l'assemblage, ledit assemblage se faisant par exemple à l'aide d'une presse hydraulique, avec une pression de l'ordre de 1 à 2 bars. Il est à noter que pendant l'assemblage, l'adhésif en résine époxy remplit les trous 4a et 4b du capteur 17.

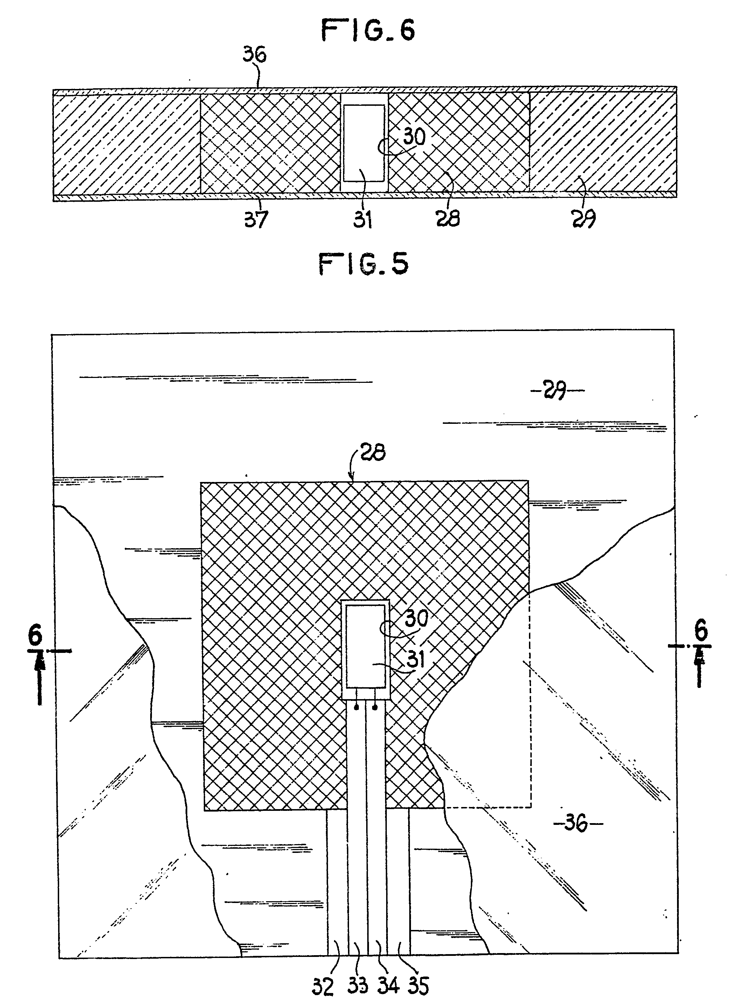

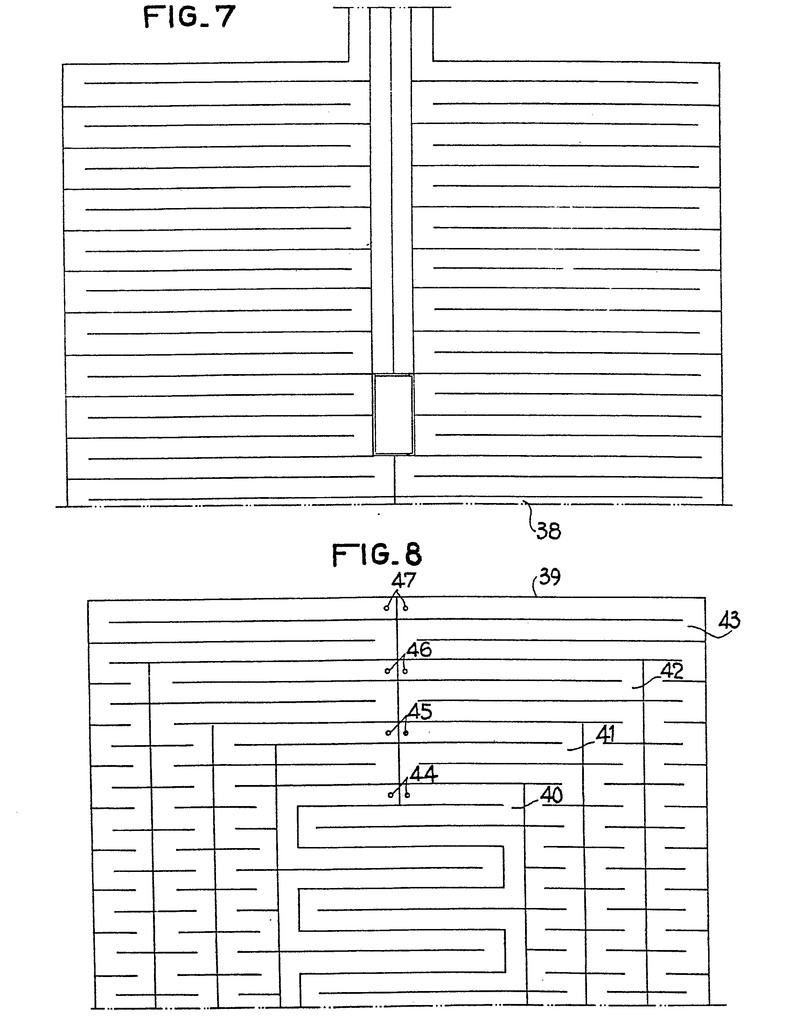

Suivant le mode de réalisation montré sur les fig. 5 et 6, le capteur 28 qui, quant à sa conception est identique aux capteurs des précédentes figures, est monté dans un cadre 29 réalisé, de préférence, en verre époxy et ayant une épaisseur de 2,4 mm environ. Dans ce cas, un logement est ménagé au centre du capteur 28 lui-même. Ce logement abrite une sonde de température 31, par exemple à résistance de platine. Les connexions vers l'extérieur sont matérialisées par des rubans conducteurs 32 à 35 déposés par tout procédé approprié sur l'une des faces du cadre 29 ou sur un prolongement du substrat du capteur 17, s'étendant jusqu'au bord du cadre 29.

Le fluxmètre comporte également deux couches de protection 36 et 37 recouvrant ses deux faces, réalisées en verre époxy et ayant une épaisseur de 0,15 mm environ.

En se référant aux fig. 1 et 2, on voit que les thermocouples 5a, 5b, 5c... sont agencés selon un motif donné qui en l'occurrence est choisi aléatoirement pour montrer les possibilités de réalisation apportées par l'invention. De même, les fig. 1 et 2 ne montrent qu'un seul montage en série des thermocouples.

Les fig. 7 et 8 sont destinées à illustrer la souplesse de réalisation qui peut être obtenue par l'invention. La fig. 7 montre un fluxmètre 38 à deux bornes, l'ensemble des thermocouples étant monté en série et leur cheminement formant dans le substrat du fluxmètre un tracé en zig-zag.

La fig. 8 à son tour montre un fluxmètre 39 qui comprend plusieurs capteurs 40, 41, 42, 43 qui sont disposés selon une configuration concentrique et reliés à des bornes 44 à 47 respectivement. Un tel fluxmètre présente un intérêt particulier si l'on désire connaître l'homogénéité de la répartition d'un flux thermique à travers une surface donnée.

Ces deux exemples montrent que grâce au fait que le fluxmètre suivant l'invention est obtenu par des procédés de dépôt métallique, il est possible, en ne changeant que les masques utilisés pour la photogravure finale, d'obtenir des fluxmètres ayant des configurations diverses pour des applications diverses.

Ce type de fluxmètre sert d'une part pour la métrologie de laboratoire et d'autre part pour faire des mesures in situ dans des éléments de bâtiments. En métrologie de laboratoire, il sera utilisé soit en capteur de flux thermique, soit en capteur de zéro pour assurer une régulation de deux plans isothermes en eux-mêmes et l'un vis-à-vis de l'autre. Dans ces deux cas, l'avantage principal des fluxmètres selon l'invention, sera de pouvoir disposer de capteurs de grandes dimensions. En outre, leur robustesse autorisera, sans problème, des mesures in situ.

**Revendications**

1. Fluxmètre thermique comprenant un capteur formé d'un substrat (1) en un matériau isolant de l'électricité dans lequel est ménagé un réseau de trous (4a et 4b) traversants et de plusieurs thermocouples (5a, 5b, 5c) associés en série et dont les jonctions chaude et froide sont respectivement disposées sur les faces opposées (2, 3) du substrat, les conducteurs de chaque thermocouple traversant respectivement des trous adjacents du substrat d'une part pour relier ses jonctions chaude et froide l'une à l'autre et d'autre part pour relier ce thermocouple à celui qui le précède et à celui qui le suit dans ledit montage en série, lesdits conducteurs étant formés par des revêtements métalliques (6, 8, 9, 10, 11, 12) déposés respectivement sur les faces (2, 3) opposées du substrat (1) et sur les parois des trous (4a, 4b) pratiqués dans celui-ci, ce fluxmètre étant caractérisé en ce que les conducteurs reliant chaque thermocouple (5a, 5b, 5c, ...) à celui qui le suit et à celui qui le précède dans le montage en série des thermocouples comprennent une portion de plaquette isolée (6a) formant partie d'un revêtement recouvrant une première face (3) du substrat (1), un revêtement d'un premier trou (4a) appartenant à ce thermocouple et formant partie d'une série de trous constituée par un trou sur deux dudit réseau, une plaquette isolée (9) délimitée dans le revêtement recouvrant la face opposée (2) du substrat et s'étendant jusqu'au-delà de l'autre trou (4b) appartenant à ce thermocouple, ainsi qu'une portion de plaquette isolée (6b) délimitée dans le revêtement de ladite première surface et entourant ledit autre trou (4b).

2. Fluxmètre suivant la revendication 1, caractérisé en ce que chaque plaquette (6 ou 9) présente une forme rectangulaire dont la longueur est égale à deux fois le pas des trous (4a, 4b) dudit réseau et le double de sa largeur.

3. Fluxmètre suivant la revendication 1, caractérisé en ce que lesdites plaquettes sont en forme de haltères et entourent respectivement deux trous adjacents dudit réseau.

4. Fluxmètre suivant l'une quelconque des revendications 1 à 3, caractérisé en ce que les conducteurs reliant les jonctions de chaque thermocouple (5a, 5b, 5c, ...) l'une à l'autre comprennent un revêtement (11) dudit autre trou (4b) de ce thermocouple, deux rondelles (10, 12) entourant des zones annulaires autour de ce trou (4b) de part et d'autre dudit substrat (1) étant connectées électriquement à ce revêtement et recouvrant respectivement les revêtements déposés sur les faces (2, 3) du substrat (1).

5. Fluxmètre suivant les revendications 1 et 4 prises ensemble, caractérisé en ce que les revêtements déposés sur les faces (2, 3) du substrat (1) et les revêtements déposés sur les parois des trous (4a) assurant la connexion entre les thermocouples sont réalisés en un premier métal identique, tel que le cuivre par exemple, tandis que les revêtements desdits trous (4b) ainsi que lesdites rondelles (10, 12) sont réalisés en un second métal tel que le nickel par exemple, formant avec ledit premier métal un couple thermoélectrique.

6. Fluxmètre suivant les revendications 1 et 4 prises ensemble, caractérisé en ce que les revêtements des deux trous (4a, 4b) appartenant à chaque thermocouple (5a, 5b, 5c) sont réalisés en deux métaux différents tel que l'or et le platine par exemple, tandis que les revêtements des faces (2, 3) du substrat (1) sont réalisés en un troisième métal tel que le cuivre par exemple pour former avec les premiers métaux des couples thermoélectriques.

7. Fluxmètre suivant l'une quelconque des revendications 2 et 6, caractérisé en ce qu'une plaquette quelconque (6) de l'une des faces (2) du substrat (1) coïncide avec la moitié d'une plaquette correspondante (9) de l'autre face (3) du substrat (1).

8. Fluxmètre suivant l'une quelconque des revendications 1 à 7, caractérisé en ce qu'il comprend en outre un cadre de protection (20, 29) entourant ledit capteur (17, 28) ainsi que deux couches de protection (18, 27, 36, 37) recouvrant respectivement de part et d'autre l'ensemble des faces du capteur et du cadre.

9. Fluxmètre suivant la revendication 8, caractérisé en ce qu'un logement (30) destiné à recevoir une sonde de température (31) est ménagé à peu près au centre dudit capteur (28).

10. Fluxmètre suivant la revendication 8, caractérisé en ce que entre ledit capteur (17) et l'une desdites couches de protection (27) est prévue une plaque (20) recouvrant ce capteur ainsi que le cadre 19 qui l'entoure, et en ce qu'un logement (21) est pratiqué dans ladite plaque (20) à un emplacement qui coïncide avec le centre dudit capteur, une sonde de température (22) étant placée dans ledit logement.

11. Fluxmètre suivant l'une quelconque des revendications 8 à 10, caractérisé en ce que les trous (4a, 4b) dudit réseau sont remplis d'une matière plastique.

**Claims**

1. A thermal fluxmeter comprising a pickup formed of a substratum (1) of an electrical insulating material having a network of transverse orifices (4a and 4b), several thermocouples (5a, 5b, 5c) serially connected and of which the hot and cold junctions are respectively positioned at opposite side faces (2, 3) of the substratum, the respective conductors of each thermocouple passing through orifices of the substratum to connect its hot and cold junctions to each other and to connect each thermocouple to the one which precedes it and to the one that follows it in the series, said conductors being formed by metallic coatings (6, 8, 9, 10, 11, 12) placed respectively on opposite side faces (2, 3) of the substratum (1) and on the walls of the orifices (4a, 4b) in the substratum, this fluxmeter being characterized in that the conductors connecting each thermocouple (5a, 5b, 5c, ...) to the one which follows it and to the one which precedes it in the series include an isolated plate area (6a) comprising a part of a coating covering a first side (3) of the substratum (1), a coating of a first orifice (4a) associated with this thermocouple and being one of a pair of orifices in said series associated with this thermocouple, an isolated plate area (9) comprising a part of the coating covering the opposite side (2) of the substratum and extending beyond the other orifice (4b) associated with this thermocouple, as well as a portion of an isolated plate area (6b) comprising a part of the coating of the said first surface and surrounding said other orifice (4b).

2. A fluxmeter according to claim 1, characterized in that each plate area (6 or 9) is rectangular having a length which is twice its width and equal to twice the spacing of the orifices (4a, 4b) of the said network.

3. A fluxmeter according to claim 1, characterized in that the said plate areas are in the form of bar bells and respectively surround two adjacent orifices of the said network.

4. A fluxmeter according to any of claims 1 to 3, characterized in that the conductors connecting the junctions of each thermocouple (5a, 5b 5c...) to one another comprise a coating (11) of the said other orifice (4b) of this thermocouple, two rings (10, 12) surrounding annular zones around this orifice (4b) on both sides of the said substratum (1) being connected electrically to this coating and covering respectively the coatings placed on the sides (2, 3) of the substratum (1).

5. Fluxmeter according to claims 1 and 4, characterized in that the coatings placed on the sides (2, 3) of the substratum (1) and the coatings placed on the walls of the orifices (4a) providing the connection between the thermocouples are formed of the same primary metal, such as copper, for example, while the coatings of the said other orifices (4b) as well as the said rings (10, 12) are formed of a second metal such as nickel, for example, forming with the said primary metal a thermo-electric couple.

6. A fluxmeter according to claims 1 and 4, characterized in that the coatings of the two orifices (4a, 4b) belonging to each thermocouple (5a, 5b, 5c...) are formed of different metals, such as gold and platinum, for example, while the coatings of the sides (2, 3) of the substratum (1) are formed of a third metal such as copper, for example, to form thermo-electric couples with the primary metal.

7. A fluxmeter according to either of claims 2 and 6, characterized in that any plates area (6) of one of the sides (2) of the substratum (1) overlaps half of a corresponding plate area (9) at the other side (3) of the substratum (1).

8. A fluxmeter according to any preceding claim, characterized in that it includes, in addition, a protective frame (20, 29) surrounding the said pickup (17, 28) as well as two protective layers (18, 27, 36, 37) on both sides of the assembly covering the respective sides of the pickup and of the frame.

9. A fluxmeter according to claim 8, characterized in that a housing (30) for a temperature probe (31) is arranged in the mid region of the said pickup (28).

10. A fluxmeter according to claim 8, characterized in that between the said pickup (17) and one of the said protective layers (27) a plate (20) is provided covering the pickup as well as the frame (19) which surrounds it, and in that a housing (21) is provided in the said plate (20) at a place coinciding with the center of the pickup, a temperature probe (22) being placed in said housing.

11. A fluxmeter according to either of claims 8 to 10, characterized in that the orifices (4a, 4b) of the said network are filled with a plastic material.

## Ansprüche

1. Wärmeflußmesser mit einem Meßfühler, gebildet aus einem Substrat (1) aus einem elektrisch isolierenden Material, in welchem ein Netz von durchgehenden Löchern (4a und 4b) sowie mehrere in Reihe einander zugeordnete Thermoelemente (5a, 5b, 5c) angebracht ist, wobei die heißen und kalten Verbindungsstellen der Thermoelemente auf den sich gegenüberliegenden Flächen (2, 3) des Substrats angeordnet sind, wobei die Leiter jedes Thermoelements jeweils benachbarte Löcher des Substrats einerseits durchsetzen, um die heißen und kalten Verbindungsstellen miteinander zu verbinden und andererseits zur Verbindung dieses Thermoelements mit dem vorhergehenden und mit dem nachfolgenden in der Reihenanordnung und wobei die Leiter durch metallische Überzüge (6, 8, 9, 10, 12) gebildet sind, die jeweils auf den gegenüberliegenden Flächen (2, 3) des Substrats (1) und auf den Wandungen der in diesen ausgesparten Löchern (4a, 4b) abgeschieden sind, wobei dieser Flußmesser sich dadurch auszeichnet, daß die jedes Thermoelement (5a, 5b, 5c...) mit dem vorhergehenden und mit dem nachfolgenden in der Reihenanordnung der Thermoelemente verbindenden Leiter umfassen : einen isolierten Plättchenteil (6a), der Teil eines eine erste Fläche (3) des Substrats (1) überdeckenden Überzugs bildet ; einen Überzug eines ersten zum Thermoelement gehörenden Loches (4a), welcher Teil einer durch jedes zweite Loch des Netzes gebildeten Reihe von Löchern bildet ; ein in dem die gegenüberliegende Fläche (2) des Substrats abdeckenden Überzug begrenztes isoliertes Plättchen (9), das sich über das andere zu diesem Thermoelement gehörenden Loch (4b) hinaus erstreckt ; sowie einen isolierten Plättchenteil (6b), der im Überzug der ersten Fläche begrenzt ist und dieses Loch (4b) umgibt.

2. Flußmesser nach Anspruch 1, dadurch gekennzeichnet, daß jedes Plättchen (6 oder 9) eine rechteckige Form aufweist, deren Länge gleich der zweifachen Lochteilung (4a, 4b) des Netzes und gleich ihrer doppelten Breite ist.

3. Flußmesser nach Anspruch 1, dadurch gekennzeichnet, daß die Plättchen die Form von Hanteln haben und jeweils zwei benachbarte Löcher dieses Netzes umgeben.

4. Flußmesser nach einem der Ansprüche 1 bis 3, dadurch gekennzeichnet, daß die die Verbindungsstellen jedes Thermoelements (5a, 5b, 5c...) miteinander verbindenden Leiter einen Überzug (11) des anderen Lochs (4b) des Thermoelements umfassen, wobei zwei Ringzonen um dieses Loch (4b) zu beiden Seiten des Substrats (1) umgebende Ringscheiben (10, 12) elektrisch mit dem Überzug verbunden sind und jeweils die auf den Flächen (2, 3) des Substrats (1) abgeschiedenen Überzüge abdecken.

5. Flußmesser nach Ansprüche 1 und 4 zusammengenommen, dadurch gekennzeichnet, daß die auf den Flächen (2, 3) des Substrats (1) abgeschiedenen Überzüge sowie die auf den Wandungen der Löcher (4a) abgeschiedenen Überzüge, die für die Verbindung zwischen den Thermoelementen sorgen, aus einem ersten gleichen Metall, beispielsweise Kupfer, hergestellt sind, während die Überzüge dieser Löcher (4b) sowie diese Ringscheiben (10, 12) aus einem zweiten mit dem ersten Metall ein thermoelektrisches Element bildenden zweiten Metall, wie beispielsweise Nickel, hergestellt sind.

6. Flußmesser nach einem der Ansprüche 1 und 4 zusammengenommen, dadurch gekennzeichnet, daß die Überzüge der beiden zu jedem Thermoelement (5a, 5b, 5c) gehörenden Löcher (4a, 4b) aus zwei unterschiedlichen Metallen, wie Gold und beispielsweise Platin, hergestellt sind, während die Überzüge der Flächen (2, 3) des Substrats (1) aus einem dritten Mettal wie Kupfer beispielsweise hergestellt sind und mit den ersten Metallen thermoelektrische Elemente bilden.

7. Flußmesser nach einem der Ansprüche 2 und 6, dadurch gekennzeichnet, daß ein beliebiges Plättchen (6) einer der Flächen (2) dés Substrats (1) mit der Hälfte eines entsprechenden Plättchens (9) der anderen Fläche (3) des Substrats (1) zusammenfällt.

8. Flußmesser nach einem der Ansprüche 1 bis 7, gekennzeichnet des weiteren durch einen diesen Meßfühler (17, 28) umgebenden Schutzrahmen (20, 29) sowie zwei Schutzschichten (18, 27, 36, 37), die jeweils zu beiden Seiten die Flächen von Meßfühler und Rahmen insgesamt überdecken.

9. Flußmesser nach Anspruch 8, dadurch gekennzeichnet, daß ein Lager (30) zur Aufnahme einer Temperatursonde (31) in etwa in der Mitte dieses Meßfühlers (28) ausgespart ist.

10. Flußmesser nach Anspruch 8, dadurch gekennzeichnet, daß zwischen dem Meßfühler (17) und einer dieser Schutzschichten (27) eine den Meßfühler sowie den ihn umgebenden Rahmen (19) abdeckende Platte (20) vorgesehen ist ; und daß ein Lager (21) in der Platte (20) an einem Ort ausgespart ist, der mit der Mitte des Meßfühlers zusammenfällt, wobei eine Temperatursonde (22) in dem Lager angeordnet ist.

11. Flußmesser nach einem der Ansprüche 8 bis 10, dadurch gekennzeichnet, daß die Löcher (4a, 4b) des Netzes mit einem Plastmaterial gefüllt sind.

FIG.1

FIG.2

FIG. 4

27 22 20

21

18 17 19

FIG. 3

-20-

17

-19-

22

21

24

23 23

14 16

-27- -27-

25 13 15 26

FIG.6

36

30

37    31    28    29

FIG.5

-29-

28

30

31

6    6

-36-

32 33 34 35

FIG_7

38

FIG.8

47

39

43

46

42

45

41

44

40